(19) **Europäisches Patentamt European Patent Office Office européen des brevets**

(11) **EP 2 204 801 B1**

(12) **EUROPEAN PATENT SPECIFICATION**

(45) Date of publication and mention of the grant of the patent:
**04.04.2012 Bulletin 2012/14**

(51) Int Cl.:
*G11B 7/14* *(2012.01)*     *G11B 7/004* *(2006.01)*
*G11B 7/09* *(2006.01)*     *G11B 7/135* *(2012.01)*
*G11B 7/24* *(2006.01)*

(21) Application number: **07807636.1**

(22) Date of filing: **20.09.2007**

(86) International application number:
**PCT/JP2007/068272**

(87) International publication number:
**WO 2009/037773 (26.03.2009 Gazette 2009/13)**

(54) **METHOD FOR RECORD REGENERATION, DEVICE FOR RECORD REGENERATION, AND RECORDING MEDIUM**

VERFAHREN ZUR AUFZEICHNUNGSREGENERATION, EINRICHTUNG ZUR AUFZEICHNUNGSREGENERATION UND AUFZEICHNUNGSMEDIUM

PROCÉDÉ DE RÉGÉNÉRATION D'ENREGISTREMENT, DISPOSITIF DE RÉGÉNÉRATION D'ENREGISTREMENT ET SUPPORT D'ENREGISTREMENT

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**07.07.2010 Bulletin 2010/27**

(73) Proprietor: **Pioneer Corporation Kanagawa 212-0031 (JP)**

(72) Inventors:
  • **SATO, Makoto**
    **Tsurugashima-shi**
    **Saitama 350-2288 (JP)**
  • **OGASAWARA, Masakazu**
    **Tsurugashima-shi**
    **Saitama 350-2288 (JP)**

(74) Representative: **Manitz, Finsterwald & Partner GbR**
    **Martin-Greif-Strasse 1**
    **80336 München (DE)**

(56) References cited:
**WO-A2-2006/111972     JP-A- 2003 051 129**
**JP-A- 2003 067 939     JP-A- 2006 012 301**
**JP-A- 2007 200 427**

**Description**

**TECHNICAL FIELD**

The present invention relates to a record carrier such as an optical disk or card or the like with which information is optically recorded or reproduced, and a recording and reproducing method therefor and a recording and reproducing device therefor. The features of the preamble of the independent claims are known from JP3110532.

**BACKGROUND ART**

In recent years, there are widely used optical disks as record carriers for means of recording and reproducing information such as video data, audio data, computing data, etc. For example, standards of DVD (Digital Versatile Disc) and BD (Blu-ray Disc™) includes an available two-layer diskwhich has two recording layers capable of being readout from one side of the disk, and being for the exclusive use of reproducing, or recording data.

In the two-layer disk, the readout of signals may be performed using the transfer of the focus point of a reproducing light beam between a shallow recording layer and a deep recording layer from one side of the disk. The shallow recording layer light beam has a predetermined thickness and is made of a predetermined material to be a semi-transparent so that the signal readout from the deep recording layer is performed. The deep recording layer is a reflecting layer. The two-layer disk has a transparent spacer layer with a high transmissivity in a predetermined wavelength disposed between the shallow and deep recording layers to separate them at a constant thickness.

Further, there is a demand for a next generation optical disk with a high density having a capacity higher than that of the Blu-ray Disc. Thus it will be expected to increase the number of recording layers to be multilayered in the optical disk and further, in such a multi-layered optical disk, it is provided with a guide layer separately from the recording layers in which the guide layer is used for performing a servo loop during the recording and reproducing of data. Such a system having the guide layer separated from the recording layers has been proposed in which a servo signal is obtained with a servo light beam irradiated to the guide layer and at the same time a main light beam irradiated to any one of the recording layers is used for a recording.

For example, in a prior art disclosed in Patent document 1, a servo light beam started from a servo light source is converged onto a track carrying tracking servo information in a record carrier in order to perform operations of focusing and tracking and at the same time, a light beam used for recording and reproducing of data is controlled so as to converge onto a certain recording layer. According to such a system, recording and reproducing of the multi-layered optical disk are achieved while avoiding plural guide layers to be provided for recording layers respectively.

In addition, in a prior art disclosed in Patent document 2, there is described in that the recording and reproducing of data is performed with the record carrier comprising a guide layer and plural recording layers, in which an objective lens is controlled in its position utilizing a guiding light beam from the guide layer and at the same time, readout from plural tracks is performed using plural light beams reflected from the recording layers. The Patent document 2 has referred to simultaneous recording of plural tracks using plural light sources in the examples.

The conventional technologies described in both the patent documents are similar to each other in that, while using the a single guide layer of the record carrier to control the relative position of the objective lens to the record carrier, the particular controlled objective lens makes a converging light caused form another light source onto a data recording layer during the data recording.

The Patent document 1: Japanese patent No. 3110532 publication

The Patent document 2: Laid-open Japanese Patent Application No. 2003-67939.

In addition, WO 2006111972 A2 discloses a method of formatting an optical information carrier to create a plurality of formatting marks that are to be sequentially addressed when reading recording information in the carrier.

DISCLOSURE OF THE INVENTION

Problem to be solved by the invention

The documents of the Patent document 1 and Patent document 2 neither state that the data recording is performed simultaneously per a unit of group of plural tracks nor suggest any interval of the tracks and any width of the track.

In case that the data recording is performed at one position on a recording layer disposed far away from the guide layer having a track in the optical axis direction, such data is not always recorded just above the track in the optical axis direction because of influence of a tilt, warp or the like of the optical disk, i.e., the position of data recording is constantly shifted in the interface spreading direction of the recording layer so as to slip away from the track. This phenomenon frequently occurs at the recording layer disposed far away from the guide layer, as the number of the data recording layer increases more in the multi-layered structure.

In addition, a simultaneous data recording in plural tracks as a group may be performed even with the interval between the tracks close to each other, because a signal processing or the like may be used to readout information correctly. But, when two track groups are adjacent to each other, it will be difficult to separate the pieces of information thereof due to crosstalk caused between two neighboring track groups.

Accordingly, there is one of exemplary tasks to be achieved by the present invention to provide a recording and reproducing device, a recording and reproducing method, and a recording carrier capable of stably recording or reproducing data.

[Means for solving the problem]

According to the present invention, there is provided a recording and reproducing method for recording and/or reproducing information from a record carrier that comprises a plurality of recording layers layered in its film thickness direction and a guide layer having a plurality of tracks carrying tracking servo information, wherein a record mark is formed on each recording layer of the record carrier, the recording and reproducing method comprising:

> a focusing step of converging a servo light beam onto said guide layer as well as selectively converging a main light beam group onto one of said recording layers through a common objective lens, wherein the main light beam group comprises a plurality of main light beams neighboring each other;
> a tracking step of performing a positioning control of said objective lens so that said servo light beam is tracking on one of said tracks; and
> a recording and/or reproducing step of performing recording and/or reproducing information with said main light beam group while performing said focusing step and said tracking step,

wherein, when said servo light beam traces on one of said tracks neighboring each other, one trace group is composed of saidmain light beam group on the one of said recording layers, wherein, when said servo light beam traces on the other of said tracks neighboring each other, the other trace group is composed of said main light beam group on the one of said recording layers, wherein an interval between the one trace group and the other trace group is larger than an average trace pitch within said trace group on the one of said recording layers.

According to the present invention, there is provided a recording and reproducing device for recording and/or reproducing information from a record carrier that comprises a plurality of recording layers layered in its film thickness direction and a guide layer having a plurality of tracks carrying tracking servo information, wherein a record mark is formed on each recording layer of the record carrier, the recording and reproducing device comprising:

> a servo light beam optics;
> a main light beam optics;
> an objective lens common to the servo light beam optics and the main light beam optics; and
> a servo mechanism for converging a servo light beam onto said guide layer as well as selectively converging a main light beam group onto one of said recording layers through the common objective lens, wherein the main light beam group comprises a plurality of main light beams neighboring each other to perform a positioning control of said objective lens so that said servo light beam is tracking on one of said tracks;

wherein said plurality of main light beams are set so that, when said servo light beam traces on one of said tracks neighboring each other, one trace group is composed of said main light beam group on the one of said recording layers, wherein, when said servo light beam traces on the other of said tracks neighboring each other, the other trace group is composed of said main light beam group on the one of said recording layers, wherein an interval between the one trace group and the other trace group is larger than an average trace pitch within said trace group on the one of said recording layers.

According to the present invention, there is provided a record carrier comprising: a plurality of recording layers layered in its film thickness direction; and a guide layer having a plurality of tracks carrying tracking servo information; characterized in that, record marks are formed as mark rows with a trace pitch on each recording layer so that an interval between neighboring bundle groups each composed of the neighboring mark rows of the record mark on said each recording layer is greater than the trace pitch of the mark rows in the bundle group.

With the above configuration according to the present invention, there is a sufficient interval between the neighboring track groups i.e., each track group is dealt as a unit, a width between tracks is narrow within the track group unit while the interval between the track groups is wide during the data recording, such a configuration is effective to the simultaneous data recording in the plural tracks, so that a stable recording or reproducing of data from the record carrier is achieved.

BRIEF DESCRIPTION OF THE DRAWINGS

FIG. 1 is a scheme diaphragm showing an embodiment of a record carrier and a recording and reproducing system for recording or reproducing of data according to the present invention.

FIG. 2 is a perspective view partially parted showing an embodiment of an optical disk having a multi-layered structure according to the present invention.

FIG. 3 is a partially cross section view taken along with the line AA shown in FIG. 2.

FIG. 4 is a partially cross section view showing another embodiment of an optical disk having a multi-layered structure according to the present invention.

FIG. 5 is a partially cross section view showing another embodiment of an optical disk having a multi-layered structure according to the present invention.

FIG. 6 is a perspective view partially parted showing an embodiment of an optical disk having a multi-layered structure according to the present invention.

FIG. 7 is a perspective view partially parted showing another embodiment of an optical disk having a multi-layered structure according to the present invention.

FIG. 8 is a partially perspective view showing another embodiment of an optical disk having a multi-layered structure according to the present invention.

FIG. 9 is a partially perspective view showing another embodiment of an optical disk having a multi-layered structure according to the present invention.

FIG. 10 is a partially perspective view showing another embodiment of an optical disk having a multi-layered structure according to the present invention.

FIG. 11 shows a schematic partial sectional view showing a record carrier and a plan view thereof illustrating tracks for a recording or reproducing in a recording and reproducing device according to the present invention.

FIG. 12 is a partially cross section view showing another embodiment of a record carrier in a recording and reproducing device according to the present invention.

FIG. 13 is a partially cross section view showing another embodiment of a record carrier in a recording and reproducing device according to the present invention.

FIG. 14 is a partially cross section view showing a scheme diaphragm of a record carrier and a pickup device for performing a recording or reproducing of data in a recording and reproducing device of an embodiment according to the present invention.

FIG. 15 is a partially front view showing a servo detecting section in a recording and reproducing device according to the present invention.

FIG. 16 is a partially front view showing a readout detecting section in a recording and reproducing device according to the present invention.

FIG. 17 is a partially plan view showing a record carrier in a recording and reproducing device in another embodiment of according to the present invention.

FIG. 18 is a graph showing a change of a focusing error signal in a recording and reproducing device in an embodiment of according to the present invention.

FIG. 19 is a graph showing a change of a focusing error signal in a recording and reproducing device in another embodiment of according to the present invention.

FIG. 20 is a partially cross section view showing another embodiment of a record carrier in a recording and reproducing device according to the present invention.

FIG. 21 is a partially plan view showing a record carrier in a recording and reproducing device in another embodiment of according to the present invention.

FIG. 22 is a graph showing an intensity distribution of a converging light spot caused by an objective lens in a recording and reproducing device in another embodiment of according to the present invention.

FIG. 23 is a partially plan view showing a record carrier in a recording and reproducing device in another embodiment of according to the present invention.

EXPLANATION OF REFERENCE NUMERALS

| WP | quarter-wavelength plate |
| 2 | record carrier |
| 3 | holding substrate |

| | |
|---|---|
| 5 | recording layer |
| 5a | first recording layer |
| 5b | second recording layer |
| 5n | n-th recording layer |
| T | track |
| 7a | first spacer layer |
| 7b | second spacer layer |
| 7n | n-th spacer layer |
| 9 | wavelength-selective reflecting film |
| 11 | guide layer |
| 13 | covering layer |
| 23 | pickup device |
| 36 | lens actuator |
| 50 | recording layer group |
| 101 | control device |
| 131 | second covering layer |
| SBLD | servo light source |
| LD1, LD2, LD3 | recording and reproducing light source |
| MB | main light beam |
| SB | servo light beam |
| OB | objective lens |
| PBS | polarizing beam splitter |
| DP | dichroic prism |
| CL3 | read-out detecting lens |
| CL2 | collimator lens |
| PBS2 | polarizing beam splitter |

DETAILED DESCRIPTION OF THE INVENTION

Embodiments of the present invention will be described below with reference to the drawings.

(RECORDING AND REPRODUCING DEVICE)

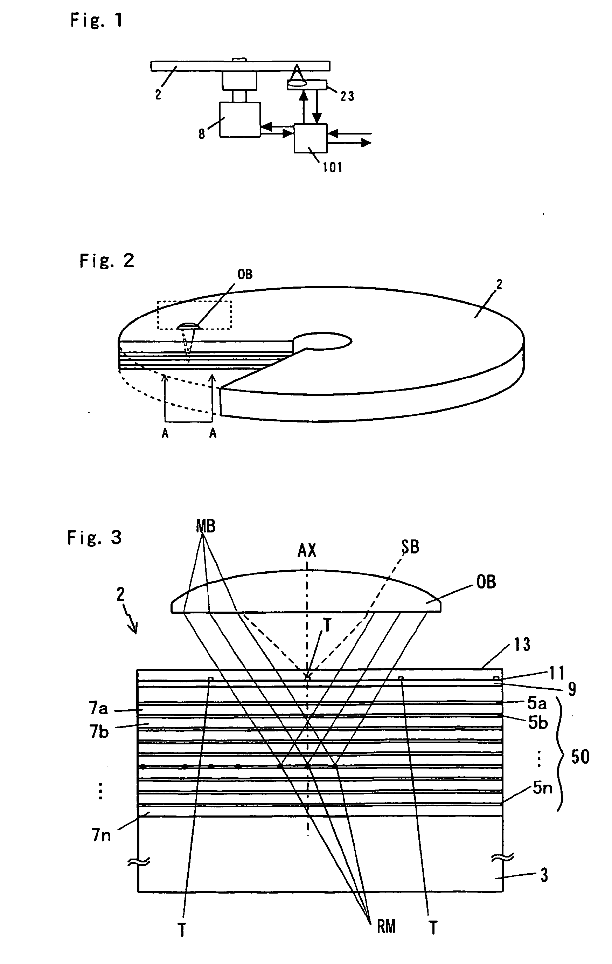

FIG. 1 is a scheme diaphragm showing an embodiment of a record carrier and a recording and reproducing sys tem for recording or reproducing of data according to the present invention.
As shown in FIG. 1, the recording and reproducing device comprises: a spindle motor 8 with a turntable (i.e., movable holding device) which detachably and rotatably supports a record carrier 2 of a disk shape; a pickup device 23 including an objective lens irradiating main light beams to the record carrier 2 for recording and reproducing; a control device 101 to control those devices, sensors, and etc. The control device 101 controls the spindle motor 8 and the pickup device 23 on the basis of various data output from various sensors provided to the spindle motor 8 and the pickup device 23 and at the same time, processes such various data. The control device 101 sends a signal to the pickup device 23 to irradiate a servo light beam and main light beams onto the record carrier 2 controlled in its rotational so as to make the main light beams converge portions of the carrier for changing their optical properties to form the record marks or record data while the light spot of the servo light beam is subjected to servo control of position. In alternative, the control device 101 sends a signal to the pickup device 23 to irradiate the other main light beams of low levels onto the record marks under the servo control condition so as to readout signals of the return light from the record marks through the pickup device to decode the signals as outputs.

(THE RECORD CARRIER)

FIG. 2 is a perspective view partially parted showing EMBODIMENT 1 of an optical disk record carrier 2 having a multi-layered structure according to the present invention. FIG. 3 is a partially cross section view taken along with the line AA shown in FIG. 2. As shown in FIG. 3, the multi-layered record carrier 2 or a multi-layered optical disk has a plurality of recording layers layered in its film thickness direction each is made of a multi-photon absorption material of a refractive index changing type. The record carrier 2 comprises a covering layer 13, a guide layer 11, a wavelength-selective reflecting film 9 for reflecting the servo light beam SB, a recording layer group 50, and a holding substrate 3, which are arranged from an incident side of the main light beams MB and the servo light beam SB. Namely, the guide layer 11 is disposed at the light incident side of the recording layer group 50 in the Embodiment.

The covering layer 13 is made of a light transmittable material of organic or inorganic such as a transparent resin material or the like so as to have functions to flatten the layered structure and protect the recording layer group 50 or the like.

The guide layer 11 has tracks T used for detecting the focusing servo signal and tracking servo signal on basis of the servo light beam SB. There is a detailed explanation of the guide layer's track T described below.

The recording layer group 50 is a stack of plural recording layers 5 in each of which data are recorded. There is a detailed explanation of the recording layer described below.

The wavelength-selective reflecting film 9 disposed between the guide layer 11 and the recording layer group 50 is made so as to reflect the servo light beam SB of wavelength (i.e., a first wavelength, for example, a wavelength longer than that of the main light beam) differing from that of the main light beams MB and transmit the main light beams MB (having the second wavelength) . In the case that the guide layer may have a wavelength-selectivity functioning the like, the wavelength-selective reflecting film 9 may be omitted. The Embodiment should be not limited by the wavelength-selective reflecting film 9.

The main light beams MB has a specific positional relationship relative to the servo light beam SB with respect to the objective lens OB making converging light beams, by irradiation of the main light beams MB at converging light spots of the main light beams MB on each recording layer 5 of the recording layer group 50, data (i.e., record marks RM) is recorded three-dimensionally. The objective lens OB having a numerical aperture irradiates the converged light beams onto one of the recording layers and collets reflected light from the recording layer group 50. With one of the converged light beam, signals are written any one recording layer of the recording layer group 50 and then readout therefrom, so that through the light irradiation at the side of the covering layer 13, recording and reproducing of data is performed.

The holding substrate 3 is made of, for example, glass, polycarbonate, amorphous polyolefin, polyimide, plastics such as PET, PEN, PES, ultraviolet curing acrylic resin, and the like. In addition, the record carrier 2 may also be formed as a card shape other than a disk shape.

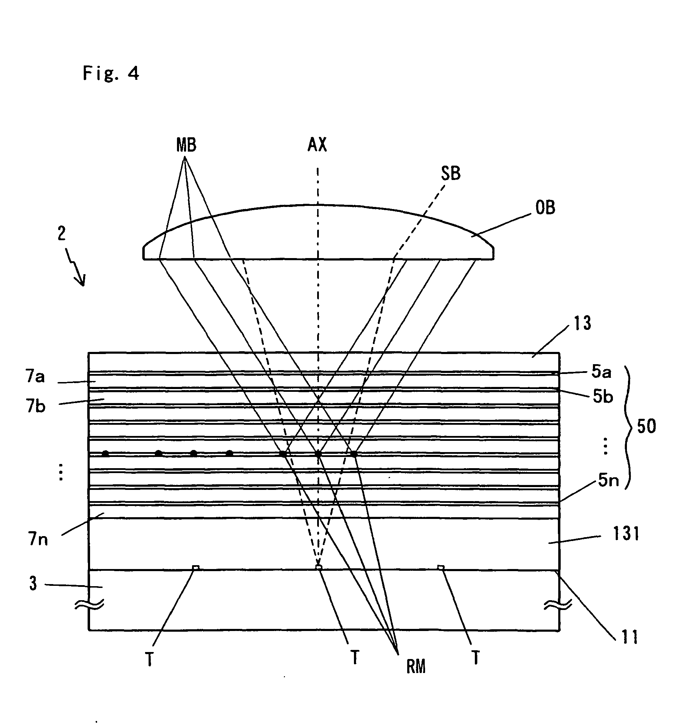

FIG. 4 is a partially schematic cross section view showing Embodiment 2 of an optical disk record carrier 2 having a multi-layered structure.

The record carrier 2 shown in FIG. 4 is almost the same as Embodiment 1, except that the guide layer 11 is disposed at the farthest over the recording layer group 50 and the second covering layer 131 from the light incident side, instead of at the light incident side of the recording layer group 50 in Embodiment 1. Each layer of the recording layer group 50 is made so as to reflect or partially reflect the main light beams MB and perfectly transmits the servo light beam SB during the driving operation. Thus the servo light beam SB travels from the light incident side to the farthest guide layer 11 without influence form the recording layer group 50. The guide layer 11 of this Embodiment is formed using a mirror or the like made of a metal material or dielectric multi-layered film for reflecting a long wavelength of the servo light beam SB. The guide layer 11 preferably has an optical property not to reflect a short wavelength of the main light beam.

The second covering layer 131 is made of a light transmittable material so as to have functions to flatten the guide layer 11 and protect the recording layer group 50 or the like.

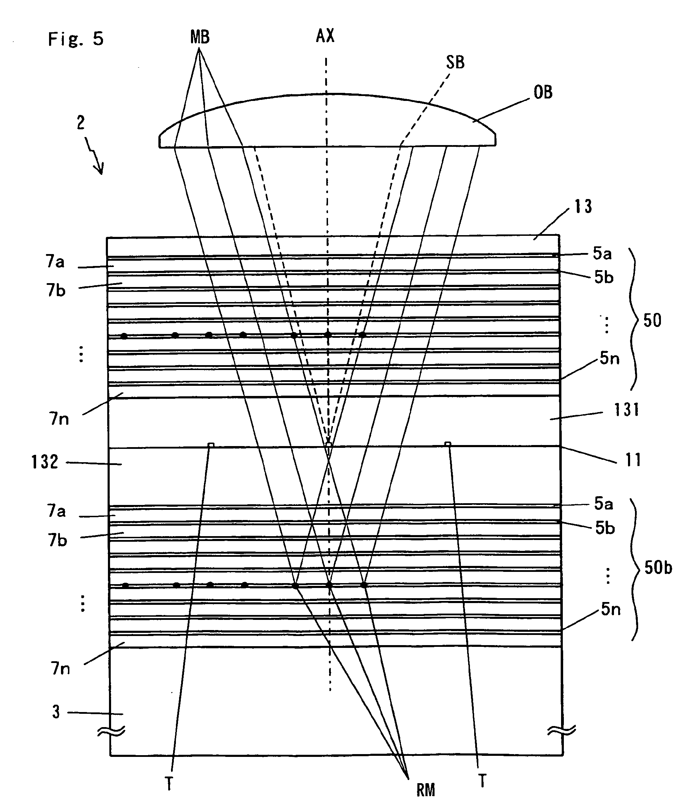

FIG. 5 is a partially schematic cross section view showing Embodiment 3 of an optical disk record carrier 2 having a double multi-layered structure.

The record carrier 2 shown in FIG. 5 is almost the same as Embodiment 2, except that another recording layer group 50b is added, and the guide layer 11 is disposed between two of the recording layer groups. Each layer of the added recording layer group 50b is similarly made so as to reflect or partially reflect the main light beams MB and perfectly transmit the servo light beam SB during the driving operation. Thus the servo light beam SB travels from the light incident side to the middle guide layer 11 without influence form the recording layer group 50.

The third the covering layer 132 is made of a light transmittable material so as to have functions to flatten the guide layer 11 and protect the recording layer group 50, similarly to the second covering layer 131. Each of the guide layer 11 and the third the covering layer 132 of this Embodiment preferably has optical properties to reflect a long wavelength of the servo light beam SB and to transmit a short wavelength of the main light beam.

In every embodiment, the record carrier 2 comprises basically a light transmitting multi-layer (i.e., the recording layer group 50) composed of a first recording layer 5a, a first spacer layer 7a, a second recording layer 5b, a second spacer layer 7b, ····a n-th recording layer 5n, and a n-th spacer layer 7n which are laminated in parallel with each other, and a holding substrate 3 supporting the multi-layer. The spacer layers 7 are provided for separating a plurality of recording layers 5 respectively, each of which is made of a resin material or the like at a thickness of several micrometers to tens micrometers. Each spacer layer (with a refractive index = "ns") keeps a predetermined length or distance between neighboring recording layers (a refractive index of portion of non-record mark = "nb" ) and have a constant thickness, wherein the recording layer and the spacer layer are alternately layered. If the difference in refractive indexes between the recording layer and the spacer layer is larger, it is more difficult for light beams to travel to the farthest layer because of increase of reflection at interfaces. Therefore, the difference in refractive indexes between the recording layer and the spacer layer should be small as possible.

Each of the recording layer can have a plurality of the record marks RM each having a refractive index which is diffident from that of its peripherals. The record mark (with a refractive index = na ≠ nb) is formed on a recording layer, for example, by a short pulse laser radiation or the like in which a multi-photon absorption phenomenon occurs only at a high photon density portion adjacent to a focus point of a converging light caused by the objective lens. The formation of record marks may be achieved by a well-known method in the art. There may be a distribution the record marks as refractive index changes on the recording layer as a conventional optical disk. The process for modulation of data recording may be achieved by a well-known method in the art. Again, in the multi-layered record carrier, the recording layer and the spacer layer with a predetermined thickness are alternately layered on the substrate, wherein recording layer has a plurality of the record marks RM each having a refractive index which is diffident from that of its peripherals, the record marks carrying data to be recorded.

By the way, there is explained about a recording process of a so-called photon recording using the multi-photon absorption.

In a conventional optical disk, the optical energy is used as a heat energy that is a heat mode recording has been performed. In the heat mode recording system, there is a limit of a high sensitivity due to its material property. Thus a multi-photon absorption recording process system based on photons is proposed instead of the heat mode recording system. The multi-photon absorption recording process is different from single-photon absorption commonly used which balances linearly with the intensity of the incident light. The multi-photon absorption recording process is a process using a phenomenon that an atom or molecule simultaneously has interactions with plural photons. Generally, in case of a low light irradiation as an ordinary laser, i.e., single-photon absorption, only one photon with an energy $E = hC/\lambda$ (wherein $\lambda$ = wavelength, h = Planck' s constant, C = velocity of light) is absorbed by a matrix or substance (e.g., an atom or molecule). Whereas, for example, when an ultra short pulse laser light converged by a high numerical aperture objective lens is applies to the matrix or substance to enhance the photon density at the focus point, so that the simultaneous absorption of two or more photons occurs in the matrix or substance as a multi-photon processes involve (n-photon absorption of a non-linear optical process), whereby the matrix or substance accepts energies E two or more times as the above energy. For example, in case that a femtosecond pulse laser is used, the multi-photon absorption of non-linear reaction occurs spatially selectively only an area adjacent to a point converged with the light beam because an electric field intensity is very high at that point. The application of two-photon absorption recording process enables to perform a multi-layer recording in which various data are three-dimensionally and spatially recorded at various points in a medium. The two-photon absorption recording process will realize an ultra multi-layered optical disk, for example, having ten or more recording layers. In other words, upon irradiating a recording layer with a light beam having a wavelength longer than an absorption wavelength band of the recording layer, whereas absorption does not occur in any recording layer in which the light beam is insufficiently converged, the two-photon absorption occurs only one target recording layer in which the light beam is sufficiently converged.

In case of a multi-photon absorption of light absorption within a substance, an absorption intensity of an n-photon absorption is in proportion to an irradiated light's intensity to the n-th power. As a result, the light absorption exhibits in a shape distribution within the substance, so that a strong chemical reaction occurs locally to enable to form a heterogeneous phase which is diffident from that of its peripherals. For example, when a pulse duration is a very short one of ranging from several femto-seconds to several hundred femto-seconds for a focal position at which a very high energy density is generated, multi-photon reaction occurs then neighboring layers absorbing photons. In addition, since the pulse duration is very short in comparison with an inverse number of lattice vibration of a substance, the laser light absorption recording process hardly suffer from thermal influence.

Thus, in the recording and reproducing method according to the present invention, the non-linear optical process of n-photon absorption enables to change an optical characteristic of a portion only in the target layer within a plurality of recording layers into another characteristic, so that such a change of the optical characteristic is use for a data reproducing process. Therefore the servo light beam SB (with the first wavelength) should be selected in wavelength in such a manner that the first wavelength is not overlapped with one n-th (1/n) of a wavelength of the main light beams MB (i.e., the second wavelength) and about wavelength thereof. Alternatively, the main light beams MB (with the second wavelength) should be selected in wavelength in such a manner that the second wavelength is not overlapped with one n-th (1/n) of a wavelength of the servo light beam SB (i.e., the first wavelength) and about wavelength thereof.

There are two-photon absorption materials classified, for example, a fluorescence type material using a fluorescent substance in which fluorescence intensity changes in the domain of two-photon absorption occurrence, and a refractive index change type using a photorefractive substance in which refractive index changes by electrons localized. In the refractive index change type of two-photon absorption materials, a hopeful materials are a photochromic compound, bis-aralkylidene-cycloalkanone derivatives or the like.

There are classified as optical disk structures using the two-photon absorption material, for example, a bulk type structure in which a whole optical disk is made of a two-photon absorption material, and a layer type structure in which plural recording layers of two-photon absorption material and plural spacer layers of transparent material each being alternately layered. Whereas the layer type structure medium has a advantage of capable of focusing servo control using the reflected light between the recording layer and the spacer layer, the layer type structure medium is apt to raise cost up because the number of multi-layer forming steps in manufacture is more than that of the bulk type structure medium.

In addition, there are other materials for the recording layer 5, for example, they have a sensitivity to at least one of wavelength and intensity of the main light beams MB to change its refractive index, transmissivity, absorbance index, reflectivity or the like so that data recording may be performed with stability. For example, transparent photo-sensible materials are usable such as a photopolymer capable of photopolymerization, photo-anisotropic material, photorefractive material, Hole Burning material, photochromic material capable of absorption spectral change due to photo-absorption, or the like.

For example, the recording layer 5 is a phase change material or two-photon absorption material or the like which is sensible to a wavelength 650nm main light beam, but not to a wavelength 780nm servo light beam. In addition, the record carrier 2 may be composed of three recording layers 5 existing at a center position of depth 0.6mm from the surface, but are not limited to the position and the number of recording layers 5.

(TRACK OF GUIDE LAYER)

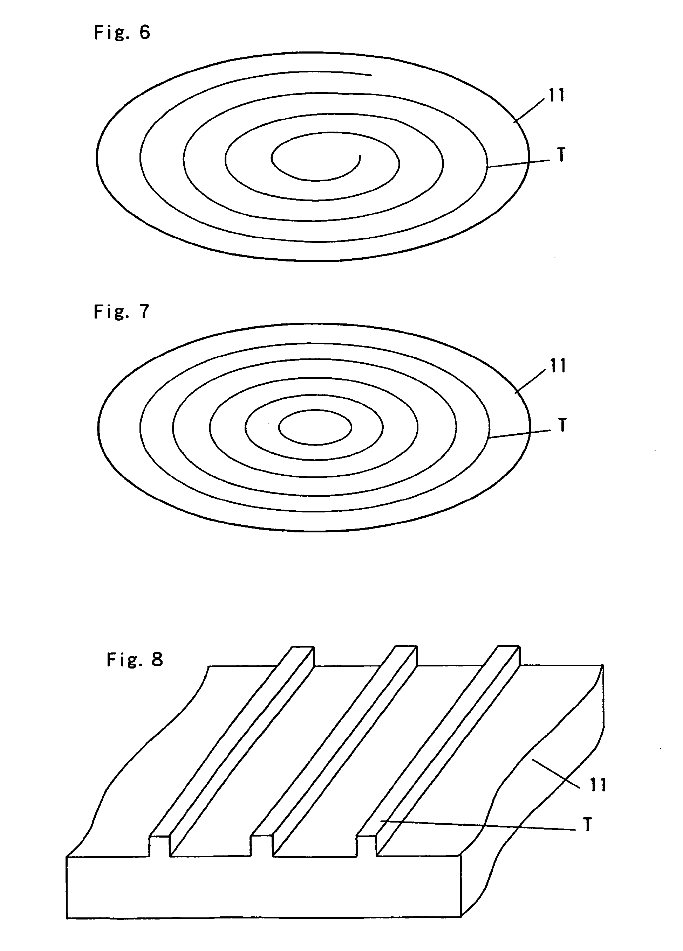

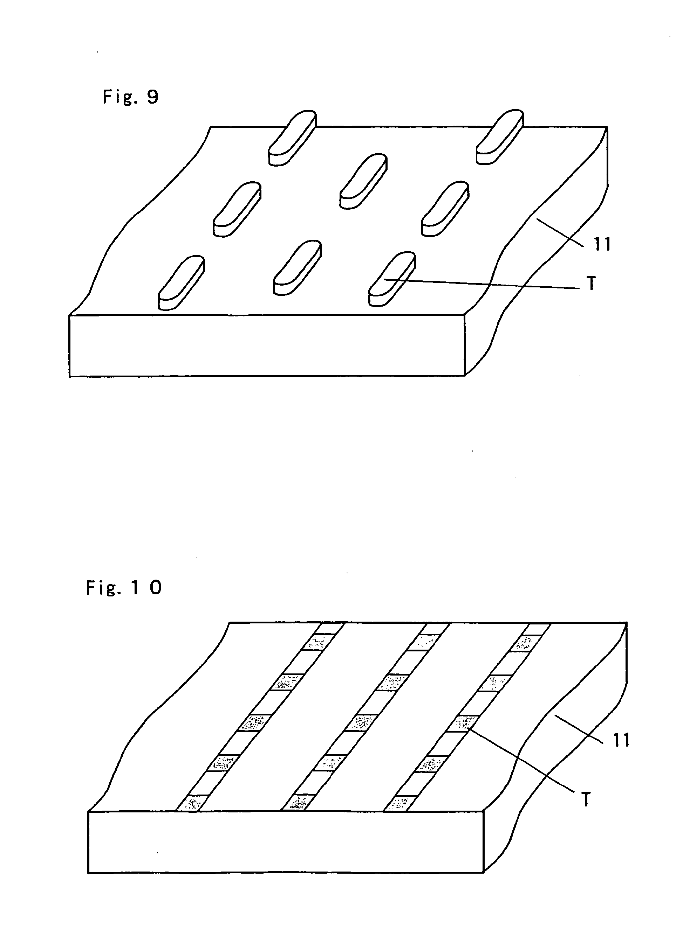

The tracks T may be formed on the guide layer 11 spirally (FIG. 6), or concentrically (FIG. 7) on the center of the substrate in order to control tracking servo using for positioning the servo light beam SB in the record carrier 2. The track T has generally a shape of protrusion (or recess) groove like as shown in FIG. 8, but are not limited to, may have a continue intermittently shape of protrusions (or recesses) as shown in FIG. 9, i.e., a pits row of the track T. In addition to protrusion or recess of interface, the track T may be formed of series different members with a change of reflectivity corresponding to the groove or pits (FIG. 10). For example, the guide layer 11 may be formed at a position of depth 0.8mm from the surface of the record carrier 2, but are not limited to such a position.

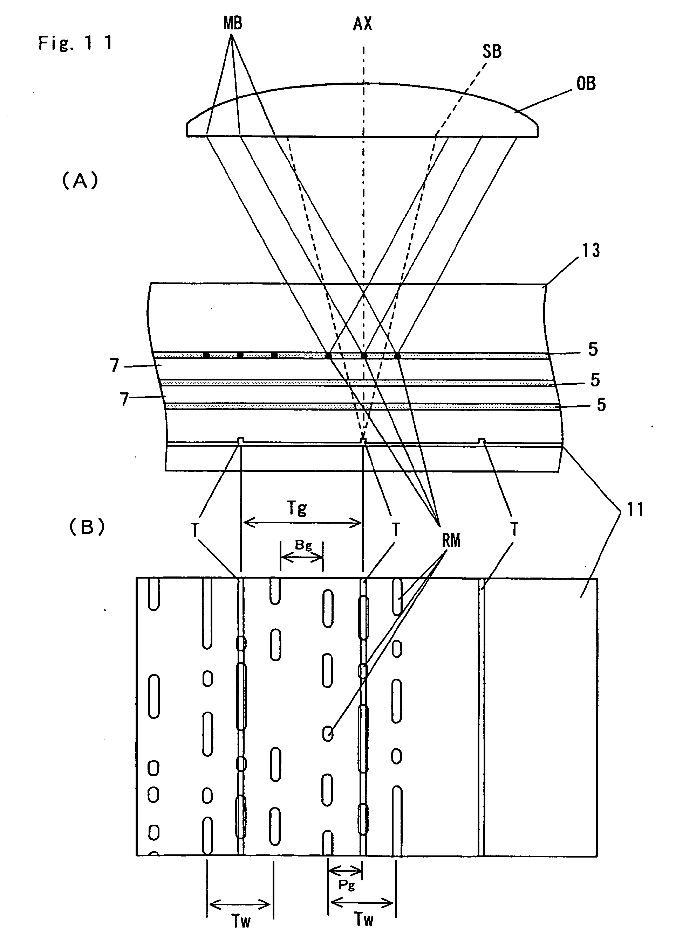

In the recording and reproducing method for performing recording or reproducing of data in the recording layer, upon using the recording layer and the guide layer with the track, the common objective lens is simultaneously converging the servo light beam to the guide layer and a plurality of main light beams to the recording layer, so that the servo light beam is tracking the track T while positioning the objective lens. Namely, the device includes a servo mechanism with a pickup which converges the servo light beam SB through the objective lens to the guide layer 11, as shown in FIG. 11, and then the device detects a reflecting light to perform a tracking control, so that a light spot caused by the objective lens OB traces the track T while keeping a distance between the objective lens OB and the record carrier 2. The common objective lens OB impinges a plurality of main light beams of second wavelength different from the servo light beam SB onto the recording layer 5 of the record carrier 2 on which plural light spots are formed, so that plural pit rows parallel to the track T to perform recording (or reproducing) of the record marks RM simultaneously.

As shown in FIG. 11, one aligned group is composed of plural spots (corresponding to three record marks RM at right side in FIG. 11A) aligned on the recording layer which are caused by a plurality of the main light beams. The other aligned group is composed of plural behind-spots (corresponding to three record marks RM at left side in FIG. 11A) aligned on the recording layer which have been caused by a plurality of the main light beams. The recording device is set in such a manner that plurality of main light beams are controlled so that the interval between the one aligned group and the other aligned group is larger than an interval between neighboring spots within each of the aligned groups. In other words, when the servo light beam traces on one of the tracks neighboring each other, one trace group is composed of the main light beam group on the one of the recording layers, whereas, when the servo light beam traces on the other of the tracks neighboring each other, the other trace group is composed of the main light beam group on the one of the recording layers. An interval between the one trace group and the other trace group is larger than an average trace pitch within the trace group. Namely, as shown in FIG. 11B, the interval Bg between the neighboring groups within the mark rows of the record marks RM is grater than a trace pitch Pg, i.e., the record mark RM's the interval.

In the recording system including the multi-layered record carrier 2, as shown in FIG. 11, providing that TW denotes a width of the pit row (corresponding to the trace group of the main light beams) in the simultaneous recording, Tg denotes an interval between the neighboring tracks T one another, "n" denotes the number of the pit rows for the simultaneous recording, the interval Tg is set to satisfy the following formula (1),

$$T_g > \frac{n}{n-1} TW \quad (1).$$

wherein for example, n=3 in FIG. 11.

Further, providing that λs denotes a wavelength of the servo light beam SB, NAs denotes a numerical aperture of said objective lens for the converged servo light beam, the interval Tg is set to satisfy the following formula (2),

$$\frac{\lambda_s}{NA_s} > T_g > \frac{n}{n-1}TW \quad (2).$$

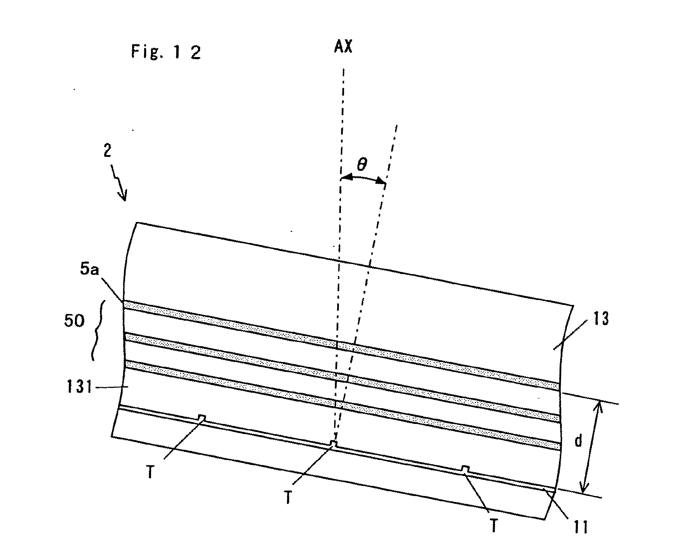

Furthermore, as shown in FIG. 12, providing that "d" denotes a length from the guide layer 11 to the farthest recording layer 5a within a plurality of recording layers (i.e., the recording layer group 50) in the optical axis direction, and "θ[rad]" denotes a value of disk tilt accepted in the recording and reproducing of data in the record carrier 2, the interval Tg is set to satisfy the following formula (3) :

$$T_g > \frac{n}{n-1}TW + 2d\theta \quad (3).$$

Advantageous effect of settings of the track described above will be explained below.

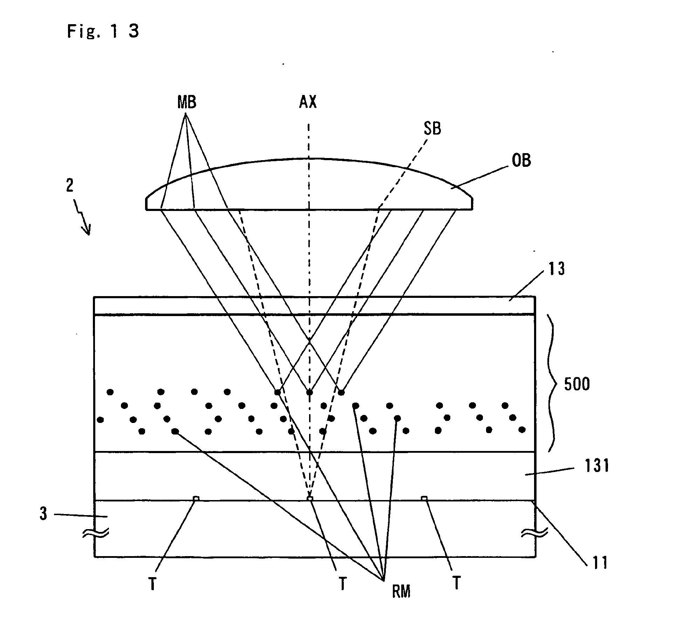

In addition to the record carrier 2 having individual plural recording layers 5 as shown in FIG. 3 - FIG. 5, there is an example of record carrier 2 comprising a three-dimensional recording domain 500 (bulk) as shown in FIG. 13. In the recording domain of the record carrier 2, the recording (or reproducing) of data is performed while changing a recording (or reproducing) position in the depth direction as similarly to the configuration of recording (or reproducing) mentioned above. FIG. 13 shows a manner that a data recording is performed on the 4th layer from the substrate side in which portions of non-recorded marks are spacer layers respectively.

(PICKUP DEVICE)

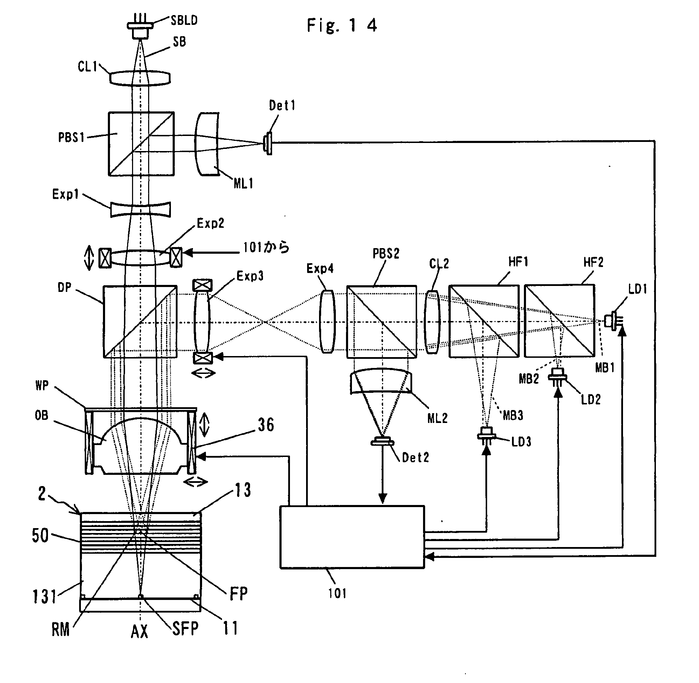

FIG. 14 is a schematic diaphragm showing the record carrier 2 and a pickup device for recording or reproducing of data in the recording and reproducing device.

For example, in the two-photon recording system, the pickup device includes a servo light source SBLD of a long wavelength (i.e., the first wavelength) used for the servo control and light sources LD1, LD2, and LD3 of a short wavelength (i.e., the second wavelength) used for the recording and reproducing of data.

A servo light beam optics includes a first collimator lens CL1, a first polarizing beam splitter PBS1, the first and second expander lenses Exp1, and Exp2, a dichroic prism DP, a quarter-wavelength plate WP and a objective lens OB, andamultilens ML1 and a servo detecting section Det1.

A main light beam optics includes half prisms HF1 and HF2, a second collimator lens CL2, a second polarizing beam splitter PBS2, the third and fourth expander lenses Exp3 and Exp4, a dichroic prism DP, a quarter-wavelength plate WP and the objective lens OB and a multilens ML2 and a readout detecting section Det2.

The pickup device configuration of the recording system includes a motion driving mechanism (i.e., the lens actuator 36) for moving the objective lens OB with respect to the record carrier 2 in which the lens is moved in the optical axis (AX) direction (i.e., focusing direction) and/or in an orthogonal direction perpendicular to the optical axis (for example, the tracking direction). By such a configuration, a position of converging light spots of the main light beams MB is adjusted relative to the record carrier 2, and thus the main light beams MB are irradiated as converging lights on the recording layer 5 of the record carrier 2 (at a certain position in the optical axis), so that a recording of data is performed to form marks RM, alternatively, a readout of data is performed in which, while decreasing intensities of the main light beams (as readout light beams) and irradiating them on to the record marks RM of the recording layer 5, the pickup receives the return light reflected form the layer through the objective lens and with the readout detecting section Det2 to detect recorded data.

In addition, FIG. 14 shows the optical pickup device comprising mainly an optical system, the control device 101 or the like, but are not limited to, the pickup device may comprise other controlling mechanism or the like (not shown) for positioning a converging light spot other than the lens actuator 36 for the focusing and tracking operations thereof, e.g., a slider moving control mechanism which moves the pickup device as a whole along with the recording surface of the record carrier 2; a servo rotation mechanism which performs the rotational control of the record carrier disk. In addition, the control device 101 comprises: a light control circuit for controlling the light source LD1, LD2, LD3 for the recording and reproducing and the servo light source SBLD; a processing circuit for processing detected signals from a readout detecting section Det2 to output information signals; a control circuit including a microcomputer, CPU or the like to control all devices ; a store circuit including ROM, RAM or the like to store obtained data; an interface unit to input and/or output data in connection with external devises ; and the like.

The control device 101 controls devices to keep constant the distance between the objective lens OB and the record carrier 2 and simultaneously, the control device 101 controls the third expander lens Exp to set the focusing position of the servo light beam SB via the objective lens so as to move the focus point FP in the optical axis direction (i.e., the film thickness direction), so that the spots of the main light beams MB is swathed or jumped into a target recording layer 5 of the recording layer group 50. By using the third expander lens Exp3 in this system, the converging main light beams MB are selectively moved into one recording layer 5.

(SERVO LIGHT BEAM CURRENT)

For example the servo light source SBLD is a wavelength 780nm semiconductor laser or the like used. Light beam output form the servo light source SBLD (linear polarization) passes through a first collimator lens CL1 and becomes a parallel light beam and, after passing through a first polarizing beam splitter PBS1, enters a expander lens composed of a concave lens and a convex lens in combination (i.e., the first expander lens Exp1, and the second expander lens Exp2) and becomes a diverging light i.e., servo light beam with a proper divergence angle. The servo light beam enters the dichroic prism DP, which is designed to transmit a wavelength 780nm light, and passes it as it is. The servo light beam passes through a quarter-wavelength plate WP and becomes a circular polarization light beam and then, enters an objective lens OB. The used quarter-wavelength plate WP is a wide band functional quarter-wavelength plate, the used objective lens OB is for example one for DVD. Such a DVD objective lens OB has a function to converge a wavelength 650nm parallel light beam through a 0.6mm thick cover glass to form a converging light spot on the opposite surface itself without any aberration. For example, since the servo light beam has a longer wavelength 780nm and is in a diverging light then it has a focus point deeper than 0.6mm from the incident side surface. Therefore for example the embodiment has a guide layer 11 disposed at a depth 0.8mm position in which the tracks T are formed with a track pitch Tg, so that the servo light beam SB can be converged on the guide layer 11.

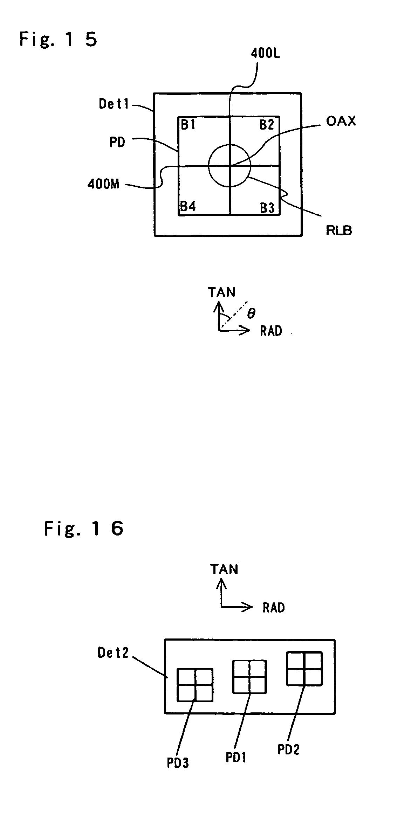

The servo light beam SB from the guide layer 11 passes through the quarter-wavelength plate WP again and become a linear polarization light beam in which its polarization direction is rotated an angle 90 degree from the incident condition. The return light bean inversely travels the optical path, i.e. , is reflected by the first polarizing beam splitter PBS1, introduced into a servo detecting section Det1 including a photodetector PD. A multilens ML1 is configured of a spherical lens and a cylindrical lens in combination to provide the return light beam passing therethough an astigmatism. The photodetector PD of the servo detecting section Det1 receives the return light beam to output a signal. By using the output signal and processing it, there are performed various servo controls such as a focus servo to keep constant the distance between the objective lens OB and the

record carrier 2, or a tracking servo to make the objective lens OB (i.e., light spot) tracking the track T. For example, the focus servo control can utilize the astigmatic method, and the tracking servo for example, the push-pull method or the like. Since the servo control means is the same as a general optical disk system, a detail description of such a operation is omitted. But, the astigmatic method can use a quadrant photodetector in the photodetector PD. As shown in FIG. 15, the quadrant photodetectorPD is comprised of four light receiving sections (B1, B2, B3 , B4) in first through fourth quadrants which are divided by two orthogonal division lines 400L, 400M as boundary lines, positioned adjacent to one another, and independent of one another as having an equivalent area to each other. The quadrant photodetector PD is positioned such that one of the division lines 400L is in parallel with the tangential direction TAN (i.e., an extending direction of the track T), and the optical axis OAX of the return light RLB back from the recording carrier crosses at a point of intersection of the division lines 400L and 400M. In the astigmatic method, the quadrant photodetector PD is positioned such that the diagonal light receiving sections (B1, B3) are placed on a ridge line of the cylindrical lens of the multilens ML1 (which extends in the astigmatism direction), i.e., one of the division lines is positioned at an angle of 45° with respect to the ridge line about the co-axial optical axis. The light receiving sections are connected to a predetermined detector circuit (not shown), in which respective opto-electrically transduced outputs from the light receiving sections are computed to be generated as focus error signal (FES), reproduced signal, etc.. For example, the following signals are obtained using output signals B1, B2, B3, and B4 output form the light receiving sections B1, B2, B3, B4 of the quadrant photodetector PD, such as a focus error signal : FE=(B1+B3)-(B2+B4), a push-pull the a push-pull focusing error signal :PP=(B1+B4)-(B2+B3), a RF signal : RF=B1+B3+B2+B4.

Further, the numerical aperture of the servo light beam SB can be changed by using a diaphragm with an aperture (not shown) provided in the optical path of the servo light beam SB. In addition, a movement of the second expander lens Exp2 in the optical axis direction enables to adjust a degree of divergence of the light beam after passing through the expander lens, and therefore the second expander lens Exp2 enables to change the working distance between the objective lens OB and the record carrier 2 under the conditions of the focus servo control.

The first and second expander lens system may includes a zoom lens system for changing continuously the focal length of the whole lenses while keeping an image-formation position at the same plan. The zoom lens system keeping the image-formation position at the same plan moves some of within configuration lenses as a group in the optical axis direction to perform an optical correction to make a focal position coincide with only a desired position (e.g., a recording layer).

In this way, by using the servo light beam SB, the objective lens OB is controlled to position itself in a proper site (e.g., a focus point SFP of the servo light beam SB) with respect to the record carrier 2.

(MAIN LIGHT BEAM CURRENT)

Next, there is described a recording operation using a plurality of main light beams.

As shown in FIG. 14, a light source, for example, a wavelength 650nm semiconductor laser is used for recording and reproducing of data. Three semiconductor lasers having the same spec. property (LD1, LD2, LD3) are used here. First, the main light beam of the first light beam MB1 is explained which is generated by the first light source LD1. Next, the second and third light beams MB2, MB3 that belong to the main light beams is explained which is generated by the second and third the light source LD2, LD3.

The first light beam MB1 (with a linear polarization) passes through two half prisms HF2 and HF1 and becomes a parallel light beam with the second collimator lens CL2. The first light beam MB1 passes through the second polarizing beam splitter PBS2 and the fourth and third expander lens Exp4 and Exp3 (which is a Kepler type configured using convex lenses). Generally, in the expander lens of this condition, the diameter of the light beam or the like is not expanded. The dichroic prism DP is designed to reflect a wavelength 650nm light, its reflecting interface reflects and deflects the first light beam MB1 to the record carrier 2 in which the optical path is bent at a angle 90 degree. After that, the first light beam MB1 passes through the quarter-wavelength plate WP and enters the objective lens OB. Since the first light beam MB1 entering the objective lens OB is a parallel light, under a proper working distance, it converges a focus point FP on the recording layer 5 positioned at a depth 0.6mm in the record carrier 2. While rotating the record carrier 2, the device forms a row of record marks on the recording layer 5 by the first light beam MB1 with a proper ON/OFF control of the first light source LD1.

The second light beam MB2 is united at the half prism HF2 into the first light beam MB1 and travels in almost the same optical path, but the optical axis of the second light beam MB2 is slightly offset from that of the first light beam MB1 with a predetermined value.

Similarly the third light beam MB3 is united at the half prism HF1 into the first light beam MB1 and travels in almost the same optical path, but the optical axis of the third light beam MB3 is slightly offset from that of the first light beam MB1 with a predetermined value on the reverse side of the second light beam MB2.

The optical lengths from the three light sources to the second collimator lens CL2 are perfectly equal to each other. Therefore the light spots caused by the three light sources is arranged on the same recording in a line. When individual ON/OFF modulations are performed the second and third the light source LD2, LD3 respectively, the pickup forms three mark rows on the recording layer 5, along with the track T, to record data.

All of the main light beams are reflected by the recording layer 5 and then, the reflected light beams pass through the objective lens OB, the quarter-wavelength plate WP, the dichroic prism DP, the third and fourth expander lens Exp3 and Exp4 to the second polarizing beam splitter PBS2, and after that returning light beams are reflected and deflected by the splitter PBS2 to the readout detecting section Det2.

The readout detecting section Det2 includes, as shown in FIG. 16, three photodetectors PD1-PD3 corresponding to the three light sources LD1-LD3 respectively. The three photodetectors includes at least one quadrant photodetector, for example, the photodetector PD1 is a quadrant photodetector. For example, using an astigmatic method, a focusing servo signal is obtained on the basis of the output signal form the quadrant photodetector PD1. By using the focusing servo signal, the third expander lens Exp3 is driven in the optical axis direction, whereby the light spot of the first light beam MB1 is just focused on the recording layer 5 and enabled to be kept such a condition. In this time point, the light spots of the second light beam MB2 and the third light beam MB3 exist on the same plan as the spot of the first light beam MB1, they are also just focused on the recording layer 5 and enabled to be kept such a condition.

The movement of the light spot from one recording layer 5 to another recording layer 5 is performed by the third expander lens Exp3 that is driven appropriately. In this operation, while the focus servo controlling of the third expander lens Exp3 is in an OFF condition, the third expander lens Exp3 is driven in the optical axis direction. Therefore the light spot position in the record carrier 2 moves in the optical axis direction. The counting of the number of the recording layers the light spot moves from the initial position is achieved on basis of output signals from the readout detecting section Det2. When the light beam spot reaches a site adjacent to a target recording layer 5, the focus servo controlling system is automatically turned the ON condition, whereby on the light spot is just focused on the nearest recording layer 5. This operation i.e. , a layer jump sequential is almost the same as that of a general DVD two-layer optical disk, therefore a detail description of such a operation is omitted.

(BUNDLE SYSTEM AND ITS ADVANTAGEOUS EFFECT 1)

It is proposed that the track pitch is reduced to achieve a high density recording of data for a multi-layer medium, optical disk etc. The reduced track pitch brings an expectation of influence that crosstalk occurs between the neighboring tracks T which is cannot be ignored and against the readout of signals. Such a influence is similar to that of a general optical disk.

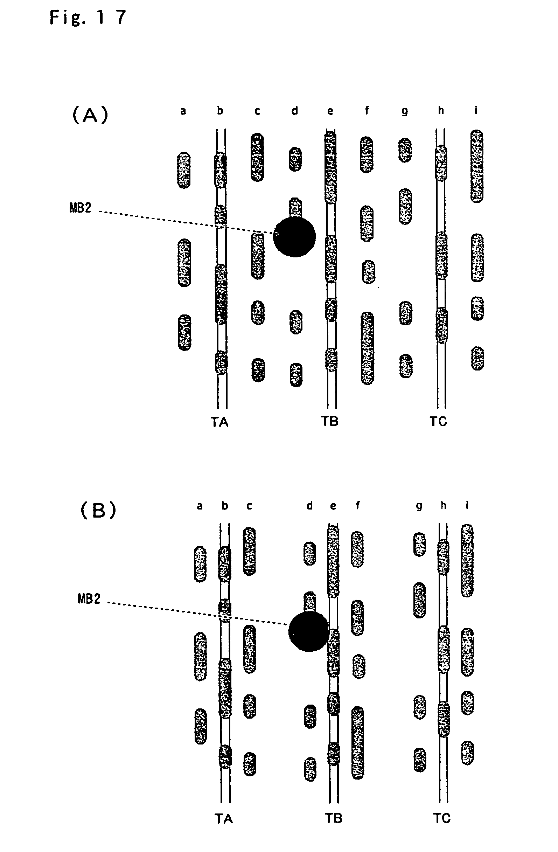

As shown in FIG. 17, nine (9) mark rows "a" -"i" are recorded on three tracks TA, TB, and TC. While tracking the track TA the mark rows "a", "b", and "c" are recorded, and while tracking the track TB the mark rows "d", "e", and "f" are recorded, and while tracking the track TC the mark rows "g" , "h" , and "i" are recorded. Here, the plural mark rows (corresponding to a trace group composed of converging light spots of a plurality of main light beams) are recorded per one track together or simultaneously, therefore one group of plural mark rows refers to one "bundle" . FIG. 17 (A) shows that the recording data is simultaneously performed in such a manner that all mark rows are arranged with an equal interval. FIG. 17(B) shows that the recording data simultaneously is performed in such a manner that the interval of three mark rows is reduced in companion with the bundle's interval. Both the intervals of the track T are almost the same, and the recording densities (i.e. , recording capacity) of both the media are almost the same. There will be an evaluation about recording and reproducing of information as follows. When the mark row "d" is reproduced, the "d" reproducing sequence suffers from influence of crosstalk from the mark rows "c" and "e". Since the mark rows "d", "e", "f" have been simultaneously recorded; it is expected to neighbor what marks come within the three mark rows. In reproducing of the mark row "d", it is clear whether or not the mark "e" exists. However, it can not be expected whether or not mark exists in the mark row "c". Therefore, crosstalk caused form from the mark row "e" can be easily removed with a signal processing or the like, but the remove of crosstalk caused form from the mark row "c" is difficult. In other words, even if crosstalk caused form from the mark row "e" increases slightly, it is preferable to configure the device in such a manner that the crosstalk caused form from the mark row "c" is reduced. Such a configuration is achieved by the arrangement as shown in FIG. 17 (B) in which the mark row's interval within one bundle is narrow and the bundle's interval is wide.

(BUNDLE SYSTEM AND ITS ADVANTAGEOUS EFFECT 2)

Whereas, in the formula (2) above mentioned, the upper value of the interval Tg of the track T is limited to Xs/NAs (wherein λs denotes a wavelength of the servo light beam SB, and NAs denotes a numerical aperture of the servo light beam converged by said objective lens), therewill beexplainedabout advantageous effect for the upper value range as follows.

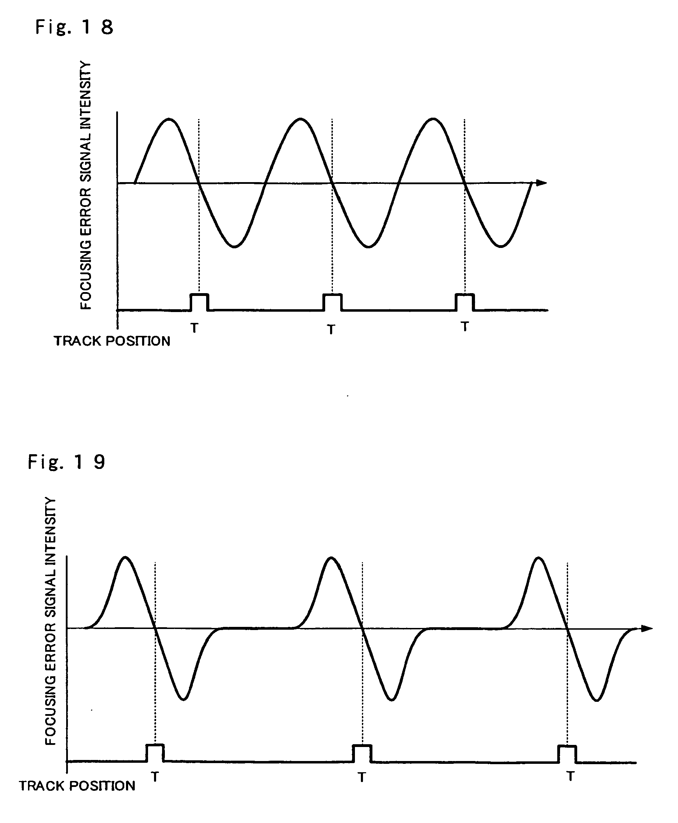

For example, the tracking servo control is performed using the push-pull method for making the servo light beam SB tracking the track T. In case that the track pitch of the track T is a proper interval, when the servo light beam SB crosses the tracks T, the focusing error signal generated by the device becomes a sine wave as shown in FIG. 18. However the track pitch is too large, the focusing error signal generated by the device exhibits a zero level between the tracks T as shown in FIG. 19, so that it becomes difficult to control the velocity of pickup movement during the track jump operation, i.e., it gives disorders such as various servo operations or the like.

Table 1 shows some specifications of three kinds of optical disks, i.e., CD, DVD, and Blu-ray Disc which are available in the market, track pitches, and λ/NA values for light beam spot systems (wherein λ = wavelength, NA = the numerical aperture).

Table 1

| | wavelength ($\lambda$) [$\mu m$] | NA | $\lambda$/NA | track pitch [$\mu m$] | track pitch normalized by $\lambda$/NA |
|---|---|---|---|---|---|
| CD | 0.785 | 0.45 | 1.74 | 1.6 | 0.92 |
| DVD | 0.65 | 0.6 | 1.08 | 0.74 | 0.68 |
| Blu-ray Disc | 0.405 | 0.85 | 0.48 | 0.32 | 0.67 |

As seem form this table, it is understood that the values of track pitch are set to be smaller than the values of λ/NA. In other words, the setting of track pitch λ/NA or less brings a high quality the focusing error signal generated by the device.

(BUNDLE SYSTEM AND ITS ADVANTAGEOUS EFFECT 3)

Another advantageous effect in the data recording obtained by the bundle system above mentioned will be described as follows.

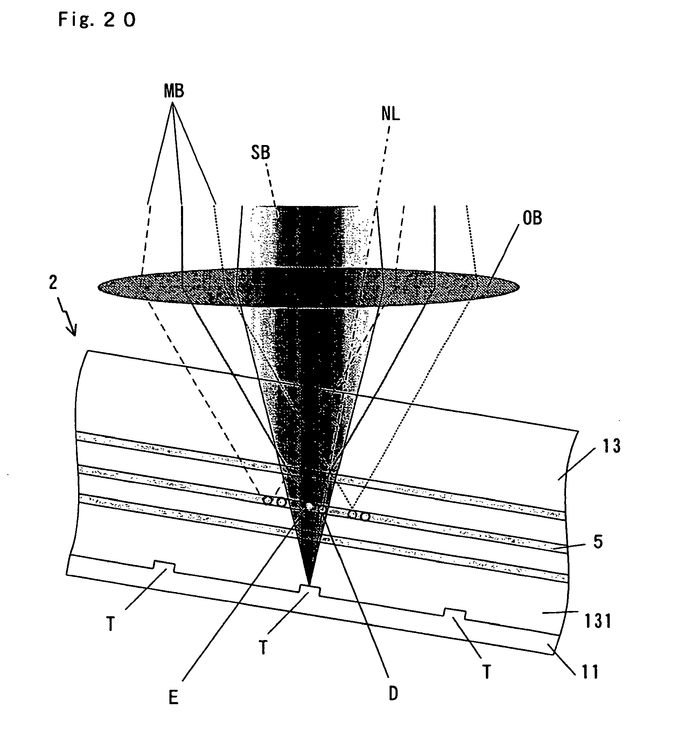

When the disk tilt of the record carrier 2 occurs, the optical disk tilted or rotated slightly about the tracking track T. As shown in FIG. 20, the position of the record mark RM is not on the position D just above the track T (on the normal line NL), the record mark RM is shifted and recorded to the position E in the recording layer 5 (in the tilt direction). When the neighboring bundles are recorded and the disk tilt condition is changed, then the neighboring bundles comes nearly each other, if worst comes to worst, the neighboring bundles may comes overlapped. Therefore it is preferable to give a margin between the bundles so as to avoid such a risk of disk tilt.

(Example configuration 1)

The servo light beam SB has a wavelength 785nm, the numerical aperture is 0.45, the main light beam has a wavelength 650nm, and the numerical aperture is 0.65. Simultaneous recording of data is performed on three tracks. There is a DVD optical disk using a wavelength 650nm in recording or reproducing of data. The DVD standard includes the substrate thickness of $0.6\mu$m, the numerical aperture of 0. 6, and the track pitch of $0.74\mu$m, in which the track pitch of $0.74\mu$m is a sufficient value to perform the reproducing data without influence of crosstalk from the neighboring tracks in view of the spot size on the DVD recording surface. It is preferably set parameters for the objective lens OB to be used in the Embodiment, providing that the numerical aperture is $NA_0$, the wavelength is $\lambda_0[\mu m]$, the spot size on the recording surface is $(\lambda_0/0.65)\times(0.6/NA_0)$ times as that of DVD, the track pitch is set to satisfy the following formula (2).

$$0.74 \times \frac{\lambda_0}{0.65} \times \frac{0.6}{NA_0} \ [\mu m] \ \fallingdotseq \ 0.683\frac{\lambda_0}{NA_0} \ [\mu m] \qquad (2)$$

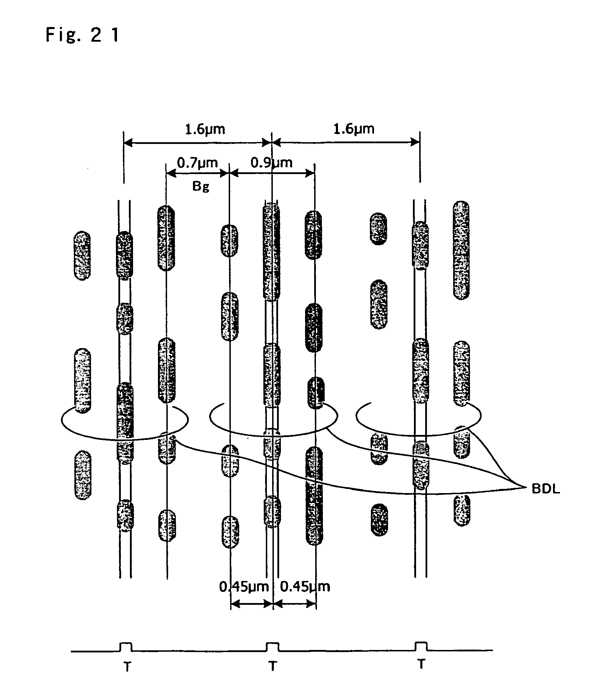

Such a setting of the track pitch provides a crosstalk level equal to or less of that of DVD. In addition to the condition of the formula (1), it is preferable to set that the bundle's interval becomes a value grater or more than that of the condition of the formula (2). Thus, the setting is performed as shown in FIG. 21, i.e. , the interval Bg between the bundles BDL is 0.7pm. By this setting, crosstalk from the neighboring bundles is suppressed at a level of DVD or less.
Since the servo light beam SB is a wavelength 785nm, and the numerical aperture is 0.45, which are almost the same of the CD standard, the CD's track pitch $1.6\mu$m may be utilized. Even in such a condition, the readout of signals form the track can be achieved without any trouble. In this condition, the bundle width (i.e., width TW possessed by the trace group of the pit rows and the main light beams) is in 1.6 - 0.7 = $0.9\mu$m which satisfies the formula (1).

(Example configuration 2)

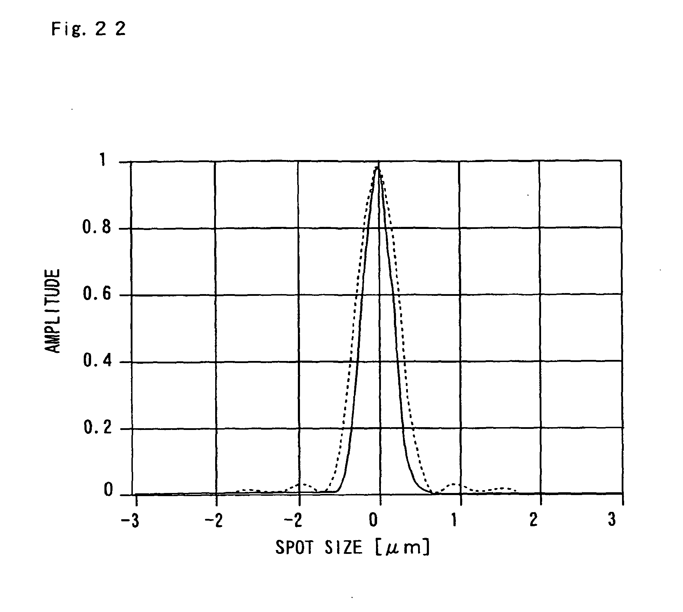

There is described about a bundle configuration using a record carrier 2 made of two-photon absorption material. Whereas a general single-photon absorption material (e.g., phase change material, organic dye or the like) has a characteristic that the photoreaction occurs in proportion to an irradiated light's intensity, the two-photon absorption material has a characteristic that the photoreaction occurs in proportion to an irradiated light's intensity to the two power. FIG. 22 is a graph showing intensity distributions of a converging light spot caused by an objective lens, which compress a general intensity distribution (as shown in a dotted line) with two powered intensity distribution (as shown in a solid line) in a recording and reproducing device. As seen from this graph, when the data recording uses the two powered intensity, even in the same wavelength and the numerical aperture, the data recording can be achieved with a smaller light beam spot having a diameter smaller than that of the conventional disk. As disclosed by Jpn. J. Appl. Phys., Vol. 44, No.5B (2005) pp. 3559-3563, when using that two-photon absorption, the spot size is substantially 1/√2 times (about 0.71 times). In other words, in the recording and reproducing performed on the basis of the principle of two-photon absorption, it is equivalent to the recording and reproducing using a spot size of about 0.71 times as a size predetermined by the numerical aperture and the wavelength.
Under the conditions that the servo light beam SB has a wavelength 785nm, the numerical aperture is 0.45, the wavelength of the main light beam is 650nm, and the numerical aperture is 0.65, the data recording is simultaneously performed on three tracks while the width between the bundles is set to satisfy the following formula.

$$0.74 \times \frac{\lambda_0}{0.65} \times \frac{0.6}{NA_0} \times \frac{1}{\sqrt{2}} \ [\mu m] \ \fallingdotseq \ 0.483\frac{\lambda_0}{NA_0} \ [\mu m]$$

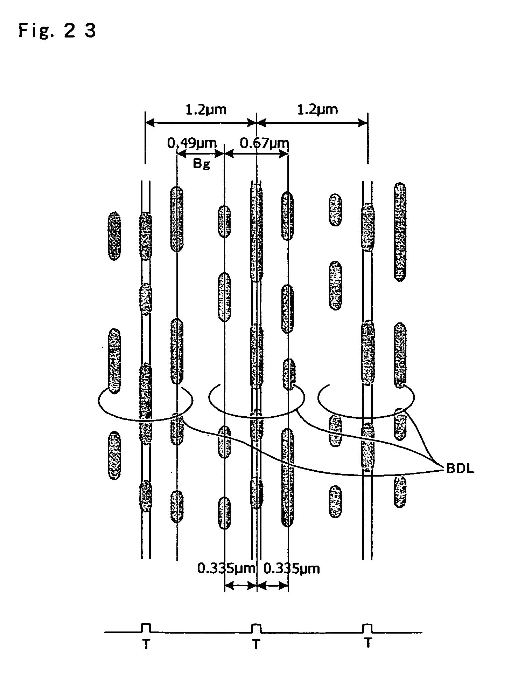

By this setting above mentioned, it is preferable that the crosstalk from the neighboring bundles is suppressed at a level of DVD or less. Thus, as shown in FIG. 23, it is set that the interval Bg between the neighboring bundles BDL is 0.49μm. In addition, the interval between the neighboring tracks T is 1.2μm, and the bundle's width (i.e., width TW possessed by the trace group of the pit rows and the main light beams) is 0.67μm which satisfies the formula (1). The configuration of the servo light beam SB is as the same as that of a reproducing device used in a general optical disk wherein the servo light beam SB is not limited to the principle of two-photon absorption. Nevertheless, the track pitch becomes narrower than that of the prior embodiment 1. The DVD's track pitch is converted using the conditions of wavelength of 785nm, and the numerical aperture of 0. 45 as follows is obtained.

$$0.74 \times (785/650) \times (0.6/0.45) = 1.19 \ [\mu m]$$

When the track pitch is normalized with the spot size, it is equivalent to that of DVD's track pitch. Therefore, it is understood that the track pitch of the present embodiment is a practice value.

According to the present invention, while tracking a guide light beam on the track T and the main light beams on the recording layer 5, the data recording (or reproducing) is stably correctly performed even in the face of unevenness of intervals of the guide layer 11 and each recording layer 5.

Further, the simultaneous data recording (or reproducing) is performed per one group of a plurality of tracks T (as a bundle), so that the transfer rate is improved.

Furthermore, since a track T's interval is narrow within the bundle while the interval is wide between the neighboring bundles during the data recording, during recording (or reproducing) of data, while keeping the surface density , so that a stable recording or reproducing of data from the record carrier is achieved even in occurrence of the disk tilt in comparison with the data recording (or reproducing) on all tracks T with a uniform interval.

**Claims**

1. A recording and reproducing method for recording and/or reproducing information from a record carrier (2) that comprises a plurality of recording layers (5) layered in its film thickness direction and a guide layer (11) having a plurality of tracks (T) carrying tracking servo information, wherein a record mark (RM) is formed on each recording layer (5) of the record carrier (2), the recording and reproducing method **characterized by** comprising:

   a focusing step of converging a servo light beam (SB) onto said guide layer (11) as well as selectively converging a main light beam (MB) group onto one of said recording layers (5) through a common objective lens (OB), wherein the main light beam (MB) group comprises a plurality of main light beams (MB) neighboring each other;
   a tracking step of performing a positioning control of said objective lens (OB) so that said servo light beam (SB) is tracking on one of said tracks (T); and
   a recording and/or reproducing step of performing recording and/or reproducing information with said main light beam (MB) group while performing said focusing step and said tracking step,
   wherein, when said servo light beam (SB) traces on one of said tracks (T) neighboring each other, one trace group is composed of said main light beam (MB) group on the one of said recording layers (5), wherein, when said servo light beam (SB) traces on the other of said tracks (T) neighboring each other, the other trace group is composed of said main light beam (MB) group on the one of said recording layers (5), wherein an interval (Bg) between the one trace group and the other trace group is larger than an average trace pitch (Pg) within said trace group on the one of said recording layers (5).

2. The recording and reproducing method according to claim 1, wherein the recording and reproducing method is performed so as to satisfy a formula (1) below,

$$T_g > \frac{n}{n-1} TW \qquad (1)$$

   wherein TW is a width possessed by said trace group, and Tg is an interval between said tracks (T) adjacent to each other, and "n" is the number of the main light beams (MB) in said trace group.

**3.** The recording and reproducing method according to claim 2, wherein the recording and reproducing method is performed so as to satisfy a formula (2) below,

$$\frac{\lambda_s}{NA_s} > T_g > \frac{n}{n-1}TW \qquad (2)$$

wherein λs is a wavelength of said servo light beam (SB), and NAs is a numerical aperture of the servo light beam (SB) converged by said objective lens (OB).

**4.** The recording and reproducing method according to claim 2, wherein the recording and reproducing method is performed so as to satisfy a formula (3) below,

$$T_g > \frac{n}{n-1}TW + 2d\theta \qquad (3)$$

wherein "d" is a length in the optical axis direction from said guide layer (11) to the farthest recording layer (5) within the plurality of recording layers (5), and "θ[rad]" is a disk tilt amount tolerated in recording and reproducing of the record carrier (2).

**5.** A recording and reproducing device for recording and/or reproducing information from a record carrier (2) that comprises a plurality of recording layers (5) layered in its film thickness direction and a guide layer (11) having a plurality of tracks (T) carrying tracking servo information, wherein a record mark (RM) is formed on each recording layer (5) of the record carrier (2), the recording and reproducing device **characterized by** comprising:

a servo light beam (SB) optics;
a main light beam (MB) optics;
an objective lens (OB) common to the servo light beam (SB) optics and the main light beam (MB) optics; and
a servo mechanism for converging a servo light beam (SB) onto said guide layer (11) as well as selectively converging a main light beam (MB) group onto one of said recording layers (5) through the common objective lens (OB), wherein the main light beam (MB) group comprises a plurality of main light beams (MB) neighboring each other to perform a positioning control of said objective lens (OB) so that said servo light beam (SB) is tracking on one of said tracks (T);
wherein said plurality of main light beams (MB) are set so that, when said servo light beam (SB) traces on one of said tracks (T) neighboring each other, one trace group is composed of said main light beam (MB) group on the one of said recording layers (5), wherein, when said servo light beam (SB) traces on the other of said tracks (T) neighboring each other, the other trace group is composed of said main light beam (MB) group on the one of said recording layers (5), wherein an interval (Bg) between the one trace group and the other trace group is larger than an average trace pitch (Pg) within said trace group on the one of said recording layers (5).

**6.** The recording and reproducing device according to claim 5, wherein the recording and reproducing device is set so as to satisfy a formula (1) below,

$$T_g > \frac{n}{n-1}TW \qquad (1)$$

wherein TW is a width possessed by said trace group, and Tg is an interval between said tracks (T) adjacent to each other, and "n" is the number of the main light beams (MB) in said trace group.

**7.** The recording and reproducing device according to claim 6, wherein the recording and reproducing device is set so as to satisfy a formula (2) below,

$$\frac{\lambda_s}{NA_s} > T_g > \frac{n}{n-1}TW \qquad (2)$$

wherein λs is a wavelength of said servo light beam (SB), and NAs is a numerical aperture of the servo light beam (SB) converged by said objective lens (OB).

**8.** The recording and reproducing device according to claim 6, wherein the recording and reproducing device is set so as to satisfy a formula (3) below,

$$T_g > \frac{n}{n-1}TW + 2d\theta \qquad (3)$$

wherein "d" is a length in the optical axis direction from said guide layer (11) to the farthest recording layer (5) within the plurality of recording layers (5), and "θ[rad] " is a disk tilt amount tolerated in recording and reproducing of the record carrier (2).

**9.** A record carrier (2) comprising: a plurality of recording layers (5) layered in its film thickness direction; and a guide layer (11) having a plurality of tracks (T) carrying tracking servo information;
**characterized in that**, record marks (RM) are formed as mark rows with a trace pitch (Pg) on each recording layer (5) so that an interval (Bg) between neighboring bundle groups each composed of the neighboring mark rows of the record mark (RM) on said each recording layer (5) is greater than the trace pitch (Pg) of the mark rows in the bundle group.

**10.** The record carrier according to claim 9, wherein the tracks are performed so as to satisfy a formula (1) below,

$$T_g > \frac{n}{n-1}TW \qquad (1)$$

wherein TW denotes a width of the mark rows of each bundle group, and Tg denotes an interval between said tracks (T) adjacent to each other, and "n" denotes the number of the mark rows in each bundle group.

**11.** The record carrier according to claim 9 or 10, wherein the plurality of recording layers (5) is made of a three-dimensional recording bulk in which portions of non-recorded marks are spacer layers (7).

**Patentansprüche**

**1.** Aufzeichnungs- und Wiedergabeverfahren zum Aufzeichnen und/oder Wiedergeben von Information von einem Datenträger (2), der mehrere Aufzeichnungsschichten (5), die in Richtung ihrer Filmdicke geschichtet sind, und eine Führungsschicht (11) umfasst, die mehrere Spuren (T) aufweist, die eine Nachführungs-Servoinformation tragen, wobei eine Aufzeichnungsmarkierung (RM) auf jeder Aufzeichnungsschicht (5) des Datenträgers (2) gebildet ist, wobei das Aufzeichnungs- und Wiedergabeverfahren **dadurch gekennzeichnet ist, dass** es umfasst:

einen Fokussierungsschritt, bei dem durch eine gemeinsame Objektivlinse (OB) ein Servo-Lichtstrahl (SB) auf der Führungsschicht (11) gebündelt wird und auch eine Hauptlichtstrahlgruppe (MB) selektiv auf einer der Aufzeichnungsschichten (5) gebündelt wird, wobei die Hauptlichtstrahlgruppe (MB) mehrere Hauptlichtstrahlen (MB) umfasst, die einander benachbart sind;
einen Nachführungsschritt, bei dem eine Positionierungssteuerung der Objektivlinse (OB) derart ausgeführt wird, dass der Servo-Lichtstrahl (SB) einer der Spuren (T) nachfolgt; und
ein Aufzeichnungs- und/oder Wiedergabeschritt, bei dem ein Aufzeichnen und/oder Wiedergeben von Information mit der Hauptlichtstrahlgruppe (MB) ausgeführt wird, während der Fokussierungsschritt und der Nachführungsschritt ausgeführt werden,

wobei dann, wenn der Servo-Lichtstrahl (SB) einer der Spuren (T) nachfolgt, die einander benachbart sind, eine Spurgruppe durch die Hauptlichtstrahlgruppe (MB) auf der einen der Aufzeichnungsschichten (5) gebildet wird, wobei dann, wenn der Servo-Lichtstrahl (SB) der anderen der Spuren (T) nachfolgt, die einander benachbart sind, die andere Spurgruppe durch die Hauptlichtstrahlgruppe (MB) auf der einen der Aufzeichnungsschichten (5) gebildet wird, wobei ein Abstand (Bg) zwischen der einen Spurgruppe und der anderen Spurgruppe größer als ein mittlerer Spurabstand (Pg) innerhalb der Spurgruppe auf der einen der Aufzeichnungsschichten (5) ist.

2. Aufzeichnungs- und Wiedergabeverfahren nach Anspruch 1, wobei das Aufzeichnungs- und Wiedergabeverfahren derart ausgeführt wird, dass es eine nachstehende Formel (1) erfüllt,

$$T_g > \frac{n}{n-1} TW \qquad (1)$$

wobei TW eine Breite ist, die durch die Spurgruppe eingenommen wird, und Tg ein Abstand zwischen den Spuren (T) ist, die einander benachbart sind, und "n" die Anzahl der Hauptlichtstrahlen (MB) in der Spurgruppe ist.

3. Aufzeichnungs- und Wiedergabeverfahren nach Anspruch 2, wobei das Aufzeichnungs- und Wiedergabeverfahren derart ausgeführt wird, dass es eine nachstehende Formel (2) erfüllt,

$$\frac{\lambda_s}{NA_s} > T_g > \frac{n}{n-1} TW \qquad (2)$$

wobei $\lambda$s eine Wellenlänge des Servo-Lichtstrahls (SB) ist und NAs eine numerische Apertur des Servo-Lichtstrahls (SB) ist, der durch die Objektivlinse (OB) gebündelt wird.

4. Aufzeichnungs- und Wiedergabeverfahren nach Anspruch 2, wobei das Aufzeichnungs- und Wiedergabeverfahren derart ausgeführt wird, dass es eine nachstehende Formel (3) erfüllt,

$$T_g > \frac{n}{n-1} TW + 2d\theta \qquad (3)$$

wobei "d" eine Länge in der Richtung der optischen Achse von der Führungsschicht (11) zu der am weitesten entfernten Aufzeichnungsschicht (5) innerhalb der mehreren Aufzeichnungsschichten (5) ist und "θ[rad] ein Scheiben-Verkippungsbetrag ist, der bei dem Aufzeichnen und Wiedergeben des Datenträgers (2) toleriert wird.

5. Aufzeichnungs- und Wiedergabevorrichtung zum Aufzeichnen und/oder Wiedergeben von Information von einem Datenträger (2), der mehrere Aufzeichnungsschichten (5), die in Richtung ihrer Filmdicke geschichtet sind, und eine Fizhrungsschicht (11) umfasst, die mehrere Spuren (T) aufweist, die eine Nachführungs-Servoinformation tragen, wobei eine Aufzeichnungsmarkierung (RM) auf jeder Aufzeichnungsschicht (5) des Datenträgers (2) gebildet ist, wobei die Aufzeichnungs- und Wiedergabevorrichtung **dadurch gekennzeichnet ist, dass** sie umfasst:

eine Optik für einen Servo-Lichtstrahl (SB);
eine Optik für einen Hauptlichtstrahl (MB);
eine gemeinsame Objektivlinse (OB) für die Optik für den Servo-Lichtstrahl (SB) und die Optik für den Hauptlichtstrahl (MB); und
einen Servomechanismus zum Bündeln eines Servo-Lichtstrahls (SB) auf der Führungsschicht (11) und auch zum selektiven Bündeln einer Hauptlichtstrahlgruppe (MB) auf einer der Aufzeichnungsschichten (5) durch die gemeinsame Objektivlinse (OB), wobei die Hauptlichtstrahlgruppe (MB) mehrere Hauptlichtstrahlen (MB) umfasst, die einander benachbart sind, um eine Positionierungssteuerung der Objektivlinse (OB) derart auszuführen, dass der Servo-Lichtstrahl (SB) einer der Spuren (T) nachfolgt;

wobei die mehreren Hauptlichtstrahlen (MB) derart eingestellt werden, dass dann, wenn der Servo-Lichtstrahl (SB) einer der Spuren (T) nachfolgt, die einander benachbart sind, eine Spurgruppe durch die Hauptlichtstrahlgruppe (MB) auf der einen der Aufzeichnungsschichten (5) gebildet wird, wobei dann, wenn der Servo-Lichtstrahl (SB) der anderen der Spuren (T) nachfolgt, die einander benachbart sind, die andere Spurgruppe durch die Hauptlichtstrahlgruppe (MB) auf der einen der Aufzeichnungsschichten (5) gebildet wird, wobei ein Abstand (Bg) zwischen der einen Spurgruppe und der anderen Spurgruppe größer als ein mittlerer Spurabstand (Pg) innerhalb der Spurgruppe auf der einen der Aufzeichnungsschichten (5) ist.

6. Aufzeichnungs- und Wiedergabevorrichtung nach Anspruch 5, wobei die Aufzeichnungs- und Wiedergabevorrichtung derart aufgebaut ist, dass sie eine nachstehende Formel (1) erfüllt,

$$T_g > \frac{n}{n-1} TW \qquad (1)$$

wobei TW eine Breite ist, die durch die Spurgruppe eingenommen wird, und Tg ein Abstand zwischen den Spuren (T) ist, die einander benachbart sind, und "n" die Anzahl der Hauptlichtstrahlen (MB) in der Spurgruppe ist.

7. Aufzeichnungs- und Wiedergabevorrichtung nach Anspruch 6, wobei die Aufzeichnungs- und Wiedergabevorrichtung derart aufgebaut ist, dass sie eine nachstehende Formel (2) erfüllt,

$$\frac{\lambda_s}{NA_s} > T_g > \frac{n}{n-1} TW \qquad (2)$$

wobei $\lambda_s$ eine Wellenlänge des Servo-Lichtstrahls (SB) ist und NAs eine numerische Apertur des Servo-Lichtstrahls (SB) ist, der durch die Objektivlinse (OB) gebündelt wird.

8. Aufzeichnungs- und Wiedergabevorrichtung nach Anspruch 6, wobei die Aufzeichnung- und Wiedergabevorrichtung derart aufgebaut ist, dass sie eine nachstehende Formel (3) erfüllt,

$$T_g > \frac{n}{n-1} TW + 2d\theta \qquad (3)$$

wobei "d" eine Länge in der Richtung der optischen Achse von der Führungsschicht (11) zu der am weitesten entfernten Aufzeichnungsschicht (5) innerhalb der mehreren Aufzeichnungsschichten (5) ist und "θ[rad]" ein Scheiben-Verkippungsbetrag ist, der bei dem Aufzeichnen und Wiedergeben des Datenträgers (2) toleriert wird.

9. Datenträger (2), der umfasst: mehrere Aufzeichnungsschichten (5), die in Richtung ihrer Filmdicke geschichtet sind; und eine Führungsschicht (11), die mehrere Spuren (T) aufweist, die eine Nachführungs-Servoinformation tragen; **dadurch gekennzeichnet, dass** Aufzeichnungsmarkierungen (RM) als Markierungsreihen mit einem Spurabstand (Pg) auf jeder Aufzeichnungsschicht (5) gebildet sind, sodass ein Abstand (Bg) zwischen benachbarten Bündelgruppen, die jeweils aus den benachbarten Markierungsreihen der Aufzeichnungsmarkierung (RM) auf jeder Aufzeichnungsschicht (5) gebildet sind, größer als der Spurabstand (Pg) der Markierungsreihen in der Bündelgruppe ist.

10. Datenträger nach Anspruch 9, wobei die Spuren derart ausgeführt sind, dass sie eine nachstehende Formel (1) erfüllen,

$$T_g > \frac{n}{n-1} TW \qquad (1)$$

wobei TW eine Breite der Markierungsreihen jeder Bündelgruppe bezeichnet und Tg einen Abstand zwischen den Spuren (T) bezeichnet, die einander benachbart sind, und "n" die Anzahl der Markierungsreihen in jeder Bündelgruppe bezeichnet.

**11.** Datenträger nach Anspruch 9 oder 10,
wobei die mehreren Aufzeichnungsschichten (5) aus einem dreidimensionalen Aufzeichnungsvolumen gebildet sind, in dem Abschnitte mit nicht aufgezeichneten Markierungen Abstandshalterschichten (7) sind.

## Revendications

**1.** Procédé d'enregistrement et de reproduction pour enregistrer et/ou reproduire des informations depuis un support d'enregistrement (2) qui comprend une pluralité de couches d'enregistrement (5) disposées en couches dans la direction de l'épaisseur de son film, et une couche guide (11) ayant une pluralité de pistes (T) portant des informations d'asservissement de suivi, dans lequel une marque d'enregistrement (RM) est formée sur chaque couche d'enregistrement (S) du support d'enregistrement (2), le procédé d'enregistrement et de reproduction étant **caractérisé en ce qu'**il comprend :

une étape de focalisation consistant à faire converger un faisceau de lumière d'asservissement (SB) sur ladite couche guide (11) et en même temps à faire converger sélectivement un groupe faisceau de lumière principal (MB) sur l'une desdites couches d'enregistrement (5) à travers une lentille objectif commune (OB), dans lequel le groupe faisceau de lumière principal (MB) comprend une pluralité de faisceaux de lumière principaux (MB) voisins les uns des autres ;
une étape de suivi consistant à exécuter une commande de positionnement de ladite lentille objectif (OB) de telle sorte que ledit faisceau de lumière d'asservissement (SB) effectue un suivi sur l'une desdites pistes (T) ; et une étape d'enregistrement et/ou de reproduction pour effectuer un enregistrement et/ou une reproduction d'informations avec ledit groupe faisceau de lumière principal (MB) tout en exécutant ladite étape de focalisation et ladite étape de suivi,
dans lequel, quand ledit faisceau de lumière d'asservissement (SB) effectue une trace sur l'une desdites pistes (T) voisines les unes des autres, un groupe de traces est composé dudit groupe faisceau de lumière principale (MB) sur la couche concernée parmi lesdites couches d'enregistrement (5), dans lequel, quand ledit faisceau de lumière d'asservissement (SB) effectue une trace sur une autre desdites pistes (T) voisines les unes des autres, l'autre groupe de traces est composé dudit groupe faisceau de lumière principal (MB) sur la couche concernée desdites couches d'enregistrement (5), et dans lequel un intervalle (Bg) entre le groupe de traces et l'autre groupe de traces est supérieur à un pas de trace moyen (Pg) dans ledit groupe de traces sur la couche concernée parmi lesdites couches d'enregistrement (5).

**2.** Procédé d'enregistrement et de reproduction selon la revendication 1, dans lequel le procédé d'enregistrement et de reproduction est exécuté de manière à satisfaire la formule (1) ci-dessous

$$Tg > (n/(n-1))\ TW \qquad\qquad (1)$$

dans laquelle TW est une largeur possédée par ledit groupe de traces, et Tg est un intervalle entre lesdites pistes (T) adjacentes l'une à l'autre, et "n" est le nombre de faisceaux de lumière principaux (MB) dans ledit groupe de traces.

**3.** Procédé d'enregistrement et de reproduction selon la revendication 2, dans lequel le procédé d'enregistrement et de reproduction est exécuté de manière à satisfaire la formule (2) ci-dessous

$$(\lambda s/NAs) > Tg > (n/(n-1))\ TW \qquad\qquad (2)$$

dans laquelle $\lambda s$ est une longueur d'onde dudit faisceau de lumière d'asservissement (SB) et NAs est une ouverture numérique du faisceau de lumière d'asservissement (SB) amené à converger par ladite lentille objectif (OB).

**4.** Procédé d'enregistrement et de reproduction selon la revendication 2, dans lequel le procédé d'enregistrement et de reproduction est exécuté de manière à satisfaire la formule (3) ci-dessous

$$Tg > (n/(n-1))\ TW + 2d\theta \qquad\qquad (3)$$

dans laquelle "d" est une longueur, dans la direction de l'axe optique, depuis ladite couche guide (11) jusqu'à la couche d'enregistrement (5) la plus éloignée dans la pluralité de couches d'enregistrement (5), et "θ[rad]" est une amplitude de basculement du disque tolérée lors de l'enregistrement et de la reproduction du support d'enregistrement (2).

5. Appareil d'enregistrement et de reproduction pour enregistrer et/ou reproduire des informations depuis un support d'enregistrement (2) qui comprend une pluralité de couches d'enregistrement (5) disposées en couches dans la direction de l'épaisseur de son film, et une couche guide (11) ayant une pluralité de pistes (T) portant des informations d'asservissement de suivi, dans lequel une marque d'enregistrement (RM) est formée sur chaque couche d'enregistrement (5) du support d'enregistrement (2), le dispositif d'enregistrement et de reproduction étant **caractérisé en ce qu'**il comprend :

    une optique pour faisceau de lumière d'asservissement (SB) ;
    une optique pour faisceau de lumière principal (MB) ;
    une lentille objectif (OB) commune à l'optique pour le faisceau de lumière d'asservissement (SB) et à l'optique pour le faisceau de lumière principal (MB) ; et
    un mécanisme d'asservissement pour faire converger un faisceau de lumière d'asservissement (SB) sur ladite couche guide (11) et en même temps pour faire converger sélectivement un groupe faisceau de lumière principal (MB) sur l'une desdites couches d'enregistrement (5) à travers la lentille objectif commune (OB), dans lequel le groupe faisceau de lumière principal (MB) comprend une pluralité de faisceaux de lumière principaux (MB) voisins les uns des autres pour exécuter une commande de positionnement de ladite lentille objectif (OB) de sorte que ledit faisceau de lumière d'asservissement (SB) effectue un suivi sur l'une desdites pistes (T) ;
    dans lequel ladite pluralité de faisceaux de lumière principaux (MB) sont établis de telle manière que, quand ledit faisceau de lumière d'asservissement (SB) effectue une trace sur l'une desdites pistes (T) voisines les unes des autres, un groupe de traces est composé dudit groupe faisceau de lumière principal (MB) sur la couche précitée desdites couches d'enregistrement (5), dans lequel, quand ledit faisceau de lumière d'asservissement (SB) effectue une trace sur l'autre desdites pistes (T) voisines les unes des autres, l'autre groupe de traces est composé dudit groupe faisceau de lumière principal (MB) sur la couche concernée desdites couches d'enregistrement (5), dans lequel un intervalle (Bg) entre le premier groupe de traces et l'autre groupe de traces est supérieur à un pas de trace moyen (Pg) dans ledit groupe de traces sur la couche concernée desdites couches d'enregistrement (5).

6. Appareil d'enregistrement et de reproduction selon la revendication 5, dans lequel l'appareil d'enregistrement et de reproduction est conçu de manière à satisfaire la formule (1) ci-dessous

$$Tg > (n/(n-1))\ TW \qquad\qquad (1)$$

dans laquelle TW est une largeur possédée par ledit groupe de traces, et Tg est un intervalle entre lesdites pistes (T) adjacentes l'une à l'autre, et "n" est le nombre de faisceaux de lumière principaux (MB) dans ledit groupe de traces.

7. Appareil d'enregistrement et de reproduction selon la revendication 6, dans lequel l'appareil d'enregistrement et de reproduction est conçu de manière à satisfaire la formule (2) ci-dessous

$$(\lambda s/NAs) > Tg > (n/(n-1))\ TW \qquad\qquad (2)$$

dans laquelle λs est une longueur d'onde dudit faisceau de lumière d'asservissement (SB) et NAs est une ouverture numérique du faisceau de lumière d'asservissement (SB) amené à converger par ladite lentille objectif (OB).

8. Appareil d'enregistrement et de reproduction selon la revendication 6, dans lequel l'appareil d'enregistrement et de reproduction est conçu de manière à satisfaire la formule (3) ci-dessous

$$Tg > (n/(n-1)) \, TW + 2d\theta \qquad (3)$$

dans laquelle "d" est une longueur, dans la direction de l'axe optique, depuis ladite couche guide (11) jusqu'à la couche d'enregistrement (5) la plus éloignée dans la pluralité de couches d'enregistrement (5), et "$\theta$[rad]" est une amplitude de basculement du disque tolérée lors de l'enregistrement et de la reproduction du support d'enregistrement (2).

9. Support d'enregistrement (2) comprenant : une pluralité de couches d'enregistrement (5) disposées en couches dans la direction de l'épaisseur de son film ; et une couche guide (11) ayant une pluralité de pistes (T) portant des informations d'asservissement de suivi ;
**caractérisé en ce que** des marques d'enregistrement (RM) sont formées comme des rangées de marques avec un pas de trace (Pg) sur chaque couche d'enregistrement (5) de sorte qu'un intervalle (Bg) entre des groupes de paquets voisins composés chacun des rangées de marques voisines de marques d'enregistrement (RM) sur chacune desdites couches d'enregistrement (5) est supérieur au pas de trace (Pg) des rangées de marques dans le groupe de paquets.

10. Support d'enregistrement selon la revendication 9, dans lequel les pistes sont exécutées de manière à satisfaire la formule (1) ci-dessous

$$Tg > (n/(n-1)) \, TW \qquad (1)$$

dans laquelle TW désigne une largeur des rangées de marques de chaque groupe de paquets, et Tg désigne un intervalle entre lesdites pistes (T) adjacentes l'une à l'autre, et "n" désigne le nombre des rangées de marques dans chaque groupe de paquets.

11. Support d'enregistrement selon la revendication 9 ou 10, dans lequel la pluralité de couches d'enregistrement (5) est constitué d'un volume d'enregistrement tridimensionnel dans lequel des portions de marques non enregistrées sont des couches d'espacement (7).

Fig. 1

Fig. 2

Fig. 3

Fig. 4

Fig. 5

Fig. 6

11

T

Fig. 7

11

T

Fig. 8

11

T

Fig. 9

Fig. 1 0

Fig. 1 1

(A)

(B)

Fig. 1 2

Fig. 1 3

Fig. 14

EP 2 204 801 B1

Fig. 1 5

Fig. 1 6

Fig. 17

(A)

MB2

TA    TB    TC

(B)

MB2

TA    TB    TC

Fig. 18

FOCUSING ERROR SIGNAL INTENSITY

T          T          T

TRACK POSITION

Fig. 19

FOCUSING ERROR SIGNAL INTENSITY

T          T          T

TRACK POSITION

Fig. 20

Fig. 2 1

Fig. 2 2

SPOT SIZE [μm]

Fig. 2 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3110532 B
- JP 2003067939 A
- WO 2006111972 A2

**Non-patent literature cited in the description**

- *Jpn. J. Appl. Phys.,* 2005, vol. 44 (5B), 3559-3563